# EUROPÄISCHE PATENTSCHRIFT

(11) **EP 0 733 458 B1**
(45) Veröffentlichungstag und Bekanntmachung des Hinweises auf die Patenterteilung: **21.11.2001**
(21) Anmeldenummer: 96810145.1
(22) Anmeldetag: 08.03.1996
(51) Int. Cl.: B29C 51/14, B29C 51/08

(54) **Vorrichtung zum Herstellen von geformten Verpackungen**
Method for manufacturing of moulded packages
Procédé pour la fabrication d'emballages moulés

(30) Priorität: 21.03.1995 CH 79895
(43) Veröffentlichungstag der Anmeldung: 25.09.1996
(73) Patentinhaber: Alcan Technology & Management AG, 8212 Neuhausen am Rheinfall (CH)
(72) Erfinder: Zeiter, Patrik, 8180 Bülach (CH); Oster, Heinz, 8245 Feuerthalen (CH)

(56) Entgegenhaltungen:
- EP-A- 0 420 044
- EP-A- 0 455 584
- EP-A- 0 561 310
- EP-A- 0 563 934
- DE-A- 2 321 980
- FR-A- 2 322 680
- US-A- 4 563 325

## Beschreibung

Vorliegende Erfindung betrifft eine Vorrichtung zum Herstellen von kaltverformten Formpackungen aus einem Metall-Kunststoff-Verbund durch Streckziehen, enthaltend eine Matrize mit Gesenköffnungen, in die Gesenköffnungen der Matrize vortreibbaren Stempel und einen Niederhalter als Klemmeinrichtung, die den Verbund zwischen Matrize und Klemmeinrichtung festhält. Ferner betrifft vorliegende Erfindung auch ein Verfahren zur Herstellung von kaltverformten Formpackungen aus einem Metall-Kunststoff-Verbund durch Streckziehen mit der erfindungsgemässen Vorrichtung.

Es ist bekannt, Formpackungen, wie z.B. die Bodenteile von Blisterpackungen, auch Durchdrückpackungen genannt, oder andere Verpackungsbehälter, beispielsweise durch Tiefziehen, Streckziehen oder Thermoformen herzustellen. Die Formpackungen können aus thermoplastischen Kunststoffen oder aus Folienverbunden oder Laminaten, wie z.B. Aluminiumfolien mit Kunststoff-Folien oder extrudierten Schichten aus thermoplastischen Kunststoffen hergestellt werden.

Werden die Formpackungen aus metallfolienhaltigen Laminaten gefertigt, kann dies mit Umformwerkzeugen aus einem Stempel, einer Matrize und einem Niederhalter erfolgen. Während der Umformung ist das Laminat zwischen der Matrize und dem Niederhalter klemmend festgelegt und anschliessend wird der Stempel gegen das Laminat bewegt. Der Stempel greift mit zunehmender Absenkung in die Gesenköffnungen der Matrize und verformt dabei das Laminat. Aus dem planen Laminat wird ein Formteil mit einer oder einer Mehrzahl von Vertiefungen geformt. Die Vertiefungen sind von Schultern umgeben und die Schultern entsprechen dem Laminat in der ursprünglichen Planlage. Für die Verformung zu einem Formteil kann nur der Teil des Laminates, der im Bereich der Gesenköffnung liegt, fliessen oder gedehnt werden. Damit das Laminat, und dabei besonders das metallfolienhaltige Laminat, ohne Risse und Poren umgeformt werden kann, muss ein genügend grosser seitlicher Abstand zwischen Stempel und Gesenköffnung eingehalten werden. Mit diesem Verfahren erzielt man bei einer Kaltverformung eines metallfolienhaltigen Laminates nur eine geringe Steigung der Seitenwandungen der Vertiefungen. Dies führt zu schlechten Tiefungsverhältnissen, d.h. zu Vertiefungen geringer Höhe bei grossem Durchmesser, und somit zu grossen Packungen im Verhältnis zum Füllgut.

Eine Möglichkeit, mehr verformbares Laminat zur Verfügung zu haben, um stärkere Seitenwandsteigungen zu erzielen, kann darin liegen, die Niederhalterkraft zu verkleinern und nach der Tiefzieh-Technologie zu arbeiten. Diese Technologie ist für metallfolienhaltige Laminate, beispielsweise bei Blisterpackungen, nicht anwendbar, da im Randbereich oder auch im Schulterbereich Falten entstehen würden. Der Randbereich und gegebenfalls der Schalterbereich von Formpackungen wird jedoch in der Regel zum Aufsiegeln eines Deckels herangezogen. Mit Falten würde der Rand und die Schultern des Formteils unsiegelbar.

Die Patentschrift US 4,563,325 beschreibt eine Vorrichtung und ein Verfahren zur Herstellung von Formpackungen aus thermoplastischen Kunststoffen. In einem kombinierten Tief- Streckziehverfahren wird in einem ersten Tiefziehschritt ein Vorformling geformt. In einem zweiten Streckziehschritt wird der Vorformling in einem abgetieften Schulterbereich zwischen dem Niederhalter und der Matrize festgeklemmt und streckgezogen.

Auch die EP-A-563 934 zeigt Blisterstreifen aus Kunststoff.

Aufgabe vorliegender Erfindung ist es eine Vorrichtung und ein Verfahren zu beschreiben, die es ermöglichen, metallfolienhaltige Verbunde durch Kaltverformen zu Formpackungen, resp. Formteilen, faltenfrei und mit grosser Seitenwandsteigung zu erzeugen.

Erfindungsgemäss wird dies durch eine Vorrichtung erreicht, welche sich dadurch kennzeichnet, dass die Matrize und der Niederhalter einen einander gegenüberliegenden Randbereich aufweisen und die Matrize innerhalb des Randbereiches einen Schulterbereich, welcher die Gesenköffnungen umgibt, aufweist, wobei der ganze Schulterbereich, nämlich der Bereich der Matrize, der sich innerhalb des Randbereiches befindet und der die Schultern bildet, welche die Gesenköffnungen umgeben, tiefer liegend angeordnet ist, und die Oberfläche des tiefer liegenden Schulterbereiches 0,01 bis 10 mm tiefer liegt als die Oberfläche des Randbereiches der Matrize und der Randbereich des Niederhalters und der Randbereich der Matrize in Arbeitsstellung über den Metall-Kunststoff-Verbund einander anliegen und den Metall-Kunststoff-Verbund klemmend und unverstreckbar festlegen und der tiefer liegende Schulterbereich der Matrize in Arbeitsstellung in Abstand zu den gegenüberliegenden Niederhalterteilen liegt, so dass der Metall-Kunststoff-Verbund im tiefer liegenden Schulterbereich fliessen und unter Verstreckung verformt werden kann.

In bevorzugter Ausführungsform liegt die Oberfläche des tiefer liegenden Schulterbereiches der Matrize 0,1 bis 2 mm, vorzugsweise 0,15 bis 0,3 mm, tiefer als die Oberfläche des Randbereiches der Matrize.

Die Vorrichtung nach vorliegender Erfindung weist eine Matrize mit mehreren Gesenköffnungen auf.

Zweckmässig weist die Vorrichtung, und dabei insbesondere die Matrize, 1 bis 200, vorzugsweise 8 bis 40 Gesenköffnungen auf. Die Verformung des Metall-Kunststoff-Verbundes erfolgt mittels eines Stempels. Der Stempel kann als solcher in eine Gesenköffnung dringen. Weist die Matrize mehrere Gesenköffnungen auf, kann der Stempel einen Träger oder Tragplatte oder dergl. aufweisen und daran befestigt eine den Gesenköffnungen entsprechende Anzahl Stempelkörper. Der Stempel resp. die Stempelkörper sind derart dimensioniert, dass sie unter Verformung des Metall-Kunststoff-Verbundes in die Gesenköffnungen eindringen können. Vorteilhaft ist der Durchmesser des Stempels, resp. der Stempelkörper, 3 bis 35 %, vorzugsweise 1 bis 15 % und insbesondere 5 bis 10 %, geringer als der Durchmesser der jeweiligen Gesenköffnung. Unter Durchmesser des Stempels resp. Stempelkörpers oder der Gesenköffnung wird im Falle eines nicht kreisrunden Querschnittes, wie eines konvexen Querschnittes, z.B. elliptisch, oval, polygonal, rechteckig, trapezförmig, rhomboid usw., der kleinste Durchmesser verstanden.

Die Wände der Gesenköffnungen in der Matrize stehen in der Regel in einem Winkel von 90° zur Oberfläche des Schulterbereiches. Die Kante zwischen der Wand der Gesenköffnung und der Oberfläche des Schulterbereiches kann gerundet sein, mit einem Radius von beispielsweise 0,1 bis 10 mm und zweckmässig von 0,1 bis 1 mm.

In anderer bevorzugter Ausführungsform weisen die Randbereiche des Niederhalters und der Matrize eine Breite jeweils von 1 bis 100 mm, zweckmässig 2 bis 30 und vorzugsweise von 3 bis 20 mm auf.

Die Matrize weist den Randbereich und innerhalb des Randbereiches den Schulterbereich auf. Die Gesenköffnungen sind innerhalb des Schulterbereiches insbesondere symmetrisch oder auch unsymmetrisch angeordnet und der Schulterbereich bildet demnach Stege aus, welche die Gesenköffnungen umgeben.

Der Schulterbereich der Matrize weist beispielsweise Abstände zwischen dem Randbereich der Matrize und den Gesenköffnungen und zwischen den einzelnen Gesenköffnungen von 1 bis 50 mm und vorzugsweise 5 bis 25 mm, auf.

Der Randbereich des Niederhalters oder der Randbereich der Matrize oder die Randbereiche des Niederhalters und der Matrize können teil- oder vollflächig ein Rauhigkeitsmuster aufweisen. Typische Rauhigkeitsmuster sind Riffelungen, Waffelmuster, Warzenmuster, Wabenmuster, Noppen, Verzahnungen, aufgerauhte Oberflächen usw.

Die Randbereiche des Niederhalters und der Matrize liegen in Arbeitsstellung über den Metall-Kunststoff-Verbund einander an und halten, gegebenenfalls verstärkt durch ein Rauhigkeitsmuster, den Verbund unverstreckbar fest. Der Schulterbereich der Matrize liegt zweckmässig in Abstand zu den gegenüberliegenden Niederhalterteilen und in diesem Bereich ist der Metall-Kunststoff-Verbund nicht in Berührung mit dem Niederhalter und der Metall-Kunststoff-Verbund kann sich nach Massgabe der Absenkung des Stempels verstrecken oder fliessen.

Die Schulterbereiche der Matrize können ganz oder teilweise mit einer zumindest an der Oberfläche angeordneten Schicht niedriger Reibung bedeckt sein. Mit niedriger Reibung wird in vorliegendem Falle eine Reibung nach der Vorschrift BS 2782 Method 311 A mit Werten von beispielsweise 0,3 oder darunter bis 2,1 (dimensionslose Zahl) umfasst. Die Schicht niedriger Reibung kann beispielsweise Kunststoffe, wie Polytetrafluorethylen, Polyoxymethylen (Polyacetal, POM), Polyethylen oder Polyethylenterephthalat enthalten oder daraus bestehen. Die Schicht niedriger Reibung kann auch zwei oder mehrere der beispielhaft genannten Kunststoffe in Mischung oder einen oder mehrere der Kunststoffe im Gemisch mit zusätzlichen in verteilter Form vorliegenden Hartstoffen, wie Gläser in Kugelform, aufweisen. Anstelle der Kunststoffe können andere Werkstoffe als Schicht mit niedriger Reibung in Frage kommen. Dies sind beispielsweise Metalle, wie Aluminium oder Chromstahl, insbesondere auch mit polierten Oberflächen. Weitere Oberflächenschichten mit niedriger Reibung, wie keramische Schichten oder graphit-, bornitrid- oder molybdändisulfidhaltige Schichten sind anwendbar. Die Schicht mit niedriger Reibung auf den Schulterbereichen der Matrize ist bezüglich ihrer Dicke unkritisch, da nur die Oberfläche wirksam ist. In der industriellen Anwendung ist die Schicht grossen Reibbeanspruchungen ausgesetzt und eine Schichtdicke, welchen einen Abtrag oder Verschleiss zulässt, ist vorzuziehen. Daher kann die Dicke der Schicht bei der Anwendung der genannten Kunststoffe beispielsweise von 0,5 bis 20 mm betragen. Die Schicht aus Kunststoff kann beispielsweise als vorgeformte Einlage in den abgetieften Schulterbereich der Matrize eingelegt werden oder kann durch sprühen, streichen oder rakeln oder durch ein anderes Auftragsverfahren aufgebracht werden. Die Kunststoffe können auch in einer Matrix aus anderen Stoffen, wie Keramik oder Metall aufgenommen sein. Metallschichten können beispielsweise auf der Matrize mit chemischen oder physikalischen Verfahren aufgebracht werden, wie durch galvanische oder elektrolytische Abscheidung, plattieren oder aufdampfen aus dem Vakuum, oder die Matrize kann aus den entsprechenden Metallen zumindest teilweise bestehen.

Der Stempel weist in der Regel entsprechend der Anzahl Gesenköffnungen die gleiche Anzahl Stempelkörper auf, welche entsprechende Oeffnungen im Niederhalter und in die Gesenköffnungen der Matrize greifen. Zweckmässig ist wenigstens die verformungswirksame Oberfläche, d.h. die Oberfläche des Stempels, resp. der Stempelkörper, die mit dem Verbund in Berührung kommt, beispielsweise aus Kunststoffen, wie Polytetrafluorethylen, Polyoxymethylen (Polyacetal, POM), Polyethylen oder Polyethylenterephthalat oder aus zwei oder mehreren der beispielhaft genannten Kunststoffe in Mischung oder aus einem oder mehreren der Kunststoffe im Gemisch mit zusätzlichen in verteilter Form vorliegenden Hartstoffen, wie Gläser in Kugelform. Anstelle der genannten Kunststoffe können andere Werkstoffe in Frage kommen. Dies sind beispielsweise Metalle, wie Aluminium oder Chromstahl, insbesondere auch mit polierten Oberflächen. Weitere Oberflächenschichten sind keramische Schichten oder graphit-, bornitrid- oder molybdändisulfidhaltige Schichten. Die Stempel oder die Stempelkörper können mit den Werkstoffen überzogen sein oder der Stempel, resp. die Stempelkörper können, zumindest im Bereich der Berührungsflächen oder in Teilen oder vollständig daraus bestehen.

Als Metall-Kunststoff-Verbunde können beispielsweise Verbunde, enthaltend eine Metallfolie in einer Dicke von 8 µm bis 150 µm und bevorzugt 20 bis 80 µm, angewendet werden. Die Folie kann aus z.B. Stahl, Eisen, Kupfer und bevorzugt aus Aluminium sein. Mitumfasst sind auch Metallfolien aus Legierungen, enthaltend im überwiegendem Masse eines der genannten Metalle. Bevorzugte Folien aus Aluminium können beispielsweise aus Aluminium einer Reinheit von 98,3 %, zweckmässig 98,5 % und insbesondere 99,8 % sein, wobei der Rest auf 100 % die begleitenden Verunreinigungen darstellen. Im weiteren können beispielsweise Aluminiumfolien des Types Al FeSi angewendet werden.

Als Kunststoffe können beispielsweise Schichten, Folien oder Folienverbunde, wobei die Folien und Folienverbunde auch axial oder biaxial verstreckt sein können, aus thermoplastischen Kunststoffen der Reihen der Polyolefine, der Polyamide, der Polyester, des Polyvinylchlorids und weiterer angewendet werden.

Typische Beispiele von thermoplastischen Kunststoffen sind aus der Reihe der Polyolefine sind Polyethylene, wie MDPE, HDPE, uni- und biaxial verstreckte Polyethylene, Polypropylene, wie cast-Polypropylen und uni- oder biaxial verstreckte Polypropylene, oder aus der Reihe der Polyester das Polyethylenterephthalat.

Die Schichtdicke der thermoplastischen Kunststoffe als Schicht, Folie oder Folienverbund in den Metall-Kunststoff-Verbunden kann beispielsweise 12 bis 100 µm und bevorzugt 20 bis 60 µm betragen.

Die Metallfolien und thermoplastischen Kunststoffe können z.B. durch Kaschieren, Kalandrieren oder Extrusionskaschieren zu Verbunden gefügt werden. Zu Verbinden der Schichten können fallweise Kaschierkleber und Haftvermittler angewendet werden und die zu verbindenden Oberflächen können durch Plasma-, Korona- oder. Flammvorbehandlung modifiziert werden.

Beispiele von Metall-Kunststoff-Verbunden sind Verbunde mit einer ersten Schicht, beispielsweise einer Folie oder einem Folienverbund aus den genannten thermoplastischen Kunststoffen, einer zweiten Schicht, in Form einer Metallfolie und einer auf der freien Seite der Metallfolie angebrachten dritten Schicht, einer Siegelschicht aus einem Polyolefin, wie Polyethylen oder Polypropylen oder aus PVC.

Weitere anwendbare Metall-Kunststoff-Verbunde können eine erste Schicht, beispielsweise eine Folie oder einen Folienverbund aus den genannten thermoplastischen Kunststoffen, einer zweiten Schicht in Form einer Metallfolie und einer dritten Schicht, beispielsweise einer Folie oder Folienverbund oder eine extrudierte Schicht, aus den genannten thermoplastischen Kunststoffen aufweisen. Weitere Schichten, wie Siegelschichten können vorgesehen werden.

Die Metall-Kunststoff-Verbunde können auf wenigstens einer seiner Aussenseiten oder auf beiden Aussenseiten eine Siegelschicht, in Form einer siegelbaren Folie oder eines Siegellackes aufweisen. Die Siegelschicht ist bestimmungsgemäss in äusserster Lage innerhalb des Verbundaufbaues angeordnet Insbesondere kann eine Siegelschicht auf einer Aussenseite des Verbundes vorgesehen sein, wobei diese Siegelschicht bei der Formpackung gegen die Inhalts- resp. Schulterseite gerichtet sein soll, um das Ansiegeln einer Deckelfolie oder dergL zu ermöglichen.
Typische Beispiele aus der Praxis von Metall-Kunststoff-Verbunden sind:
oPA 25/Al 45/PVC 60,
oPA 25 / Al 45 / oPA 25,
Al 120 / PP 50,
oPA 25 / Al 60 / PE 50 und
oPA 25 / Al 60 / PP 60,
wobei oPA für orientiertes Polyamid, PVC für Polyvinylchlorid, PE für Polyethylen, PP für Polypropylen und Al für Aluminium steht und die Ziffern für die Schicht-, resp. Foliendicke in µm stehen.

Die Figuren 1 bis 5 erläutern die vorliegende Erfindung beispielhaft näher.

Die Figur 1 zeigt eine Vorrichtung zur Herstellung von kaltverformten Blisterpackungen nach dem Stand der Technik schematisch im Schnitt

Die Figuren 2 und 3 zeigen erfindungsgemässe Vorrichtungen in zwei verschiedenen Ausführungsformen schematisch im Schnitt.

Die Figur 4 stellt die Draufsicht auf eine Matrize für die Vorrichtung nach vorliegender Erfindung dar.

Die Figur 5 stellt die Draufsicht auf einen Niederhalter für die Vorrichtung nach vorliegender Erfindung dar.

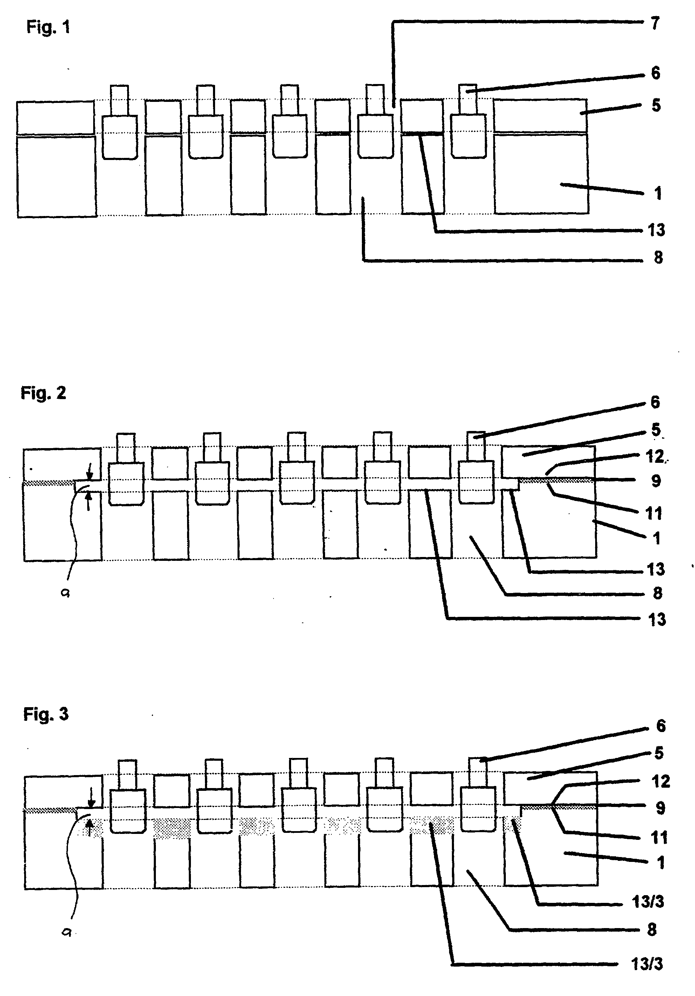

In Figur 1 ist eine Vorrichtung aus einer Matrize 1, einem Niederhalter 5 und einem Stempel 6. In vorliegendem Fall weist der Stempel einen Träger (nicht gezeigt) und daran befestigt eine Anzahl Stempelkörper 6 auf. Die Anzahl der Stempelkörper entspricht der Anzahl der Gesenköffnungen in der Matrize 1. Der Stempel, resp. die einzelnen Stempelkörper 6, durchdringen die Oeffnungen 7 im Niederhalter. Zwischen der Matrize 1 und dem Niederhalter 5 wird ein Metall-Kunststoff-Verbund eingelegt (nicht eingezeichnet). Durch Druckbeaufschlagung wird der Niederhalter 5 gegen die Matrize 1 gepresst, wobei der Metall-Kunststoff-Verbund an allen Berührungsstellen zwischen Matrize 1 und Niederhalter 5 im wesentlichen unverstreckbar festliegt. Die Stempelkörper 6 senken sich unter Krafteinwirkung durch die Oeffnungen 7 im Niederhalter, stossen auf den Metall-Kunststoff-Verbund (nicht eingezeichnet) und unter Verformung des Metall-Kunststoff-Verbundes senken sich die Stempelkörper 6 durch die Gesenköffnungen 8 in der Matrize, bis der gewünschte Verformungsgrad des Metall-Kunststoff-Verbundes erreicht ist

Der Metall-Kunststoff-Verbund wird sowohl im Randbereich als auch im Schulterbereich 13 zwischen Niederhalter 5 und Matrize 1 im wesentlichen unverstreckbar festgelegt und die Verformung des Verbundes erfolgt lediglich innerhalb des die Gesenköffnung 8 überdeckenden Materials.

In Figuren 2 und 3 wird die erfindungsgemässe Vorrichtung im Schnitt dargestellt, wiederum mit der Matrize 1, dem Niederhalter 5 und dem Stempel (Stempelkörper) 6. Der Niederhalter 5 weist einen Randbereich 12 auf. Im Randbereich 11 der Matrize ist ein Rauhigkeitsmuster 9 angebracht. Gegenüber dem Randbereich 11 ist der ganze Schulterbereich 13, d.h. der Bereich der Matrize 1, der sich innerhalb des Randbereiches 11 befindet und der die Schultern bildet, welche die Gesenköffnungen umgeben, um ein Mass (a) tiefer liegend angeordnet. Das Vertiefen des Schulterbereiches 13 der Matrize 1 kann beispielsweise durch spanabhebende Bearbeitung, wie ausfräsen, schleifen oder durch Funkenerosion usw. erfolgen. Die Matrize 1 kann auch zweiteilig angeführt werden, wobei der Randbereich 11 und der Schulterbereich 13 gegeneinander beweglich sind und gegeneinander justiert und bei erreichen der gewünschten Höhendifferenz gegenseitig festgelegt werden können. Es kann sich bei der Matrize 1 auch um ein Gusstück handeln, welches die Vertiefung, die den Schulterbereich 13 ausbildet, bereits aufweist Entsprechend ist es auch denkbar, dass der Niederhalter 5 nicht eine plane Oberfläche aufweist, die gegen die Matrize 1 gerichtet ist, sondern einen Randbereich 12 und einen gegenüber dem Randbereich 12 vertieften Schulterbereich aufweist. Der Metall-Kunststoff-Verbund wird zwischen dem Niederhalter 5 und der Matrize 1 und dabei insbesondere im Randbereich 11 der Matrize , der vom Randbereich 12 des Niederhalters überdeckt wird klemmend und unverstreckbar festgelegt. Im Schulterbereich 13, sowohl entlang den Randbereichen und den Schultern zwischen den Gesenköffnungen, kann der Metall-Kunststoff-Verbund entsprechend der Absenkung des Stempels 6 in die Gesenköffnungen 8 fliessen und unter Verstreckung verformt werden.

In Figur 3 ist das zusätzliche vorteilhafte Merkmal einer Schicht 3 mit niedriger Reibung aus beispielsweise Polytetrafluorethylen, Polyoxymethylen, Polyolefinen oder Polyethlyenterephthalat usw. gezeigt. Die Schicht 3 erstreckt sich vorteilhaft über den ganzen Schulterbereich 13 der Matrize 1. Eine Schicht 3 die nur Teile des Schulterbereiches 13 bedeckt ist fallweise möglich.

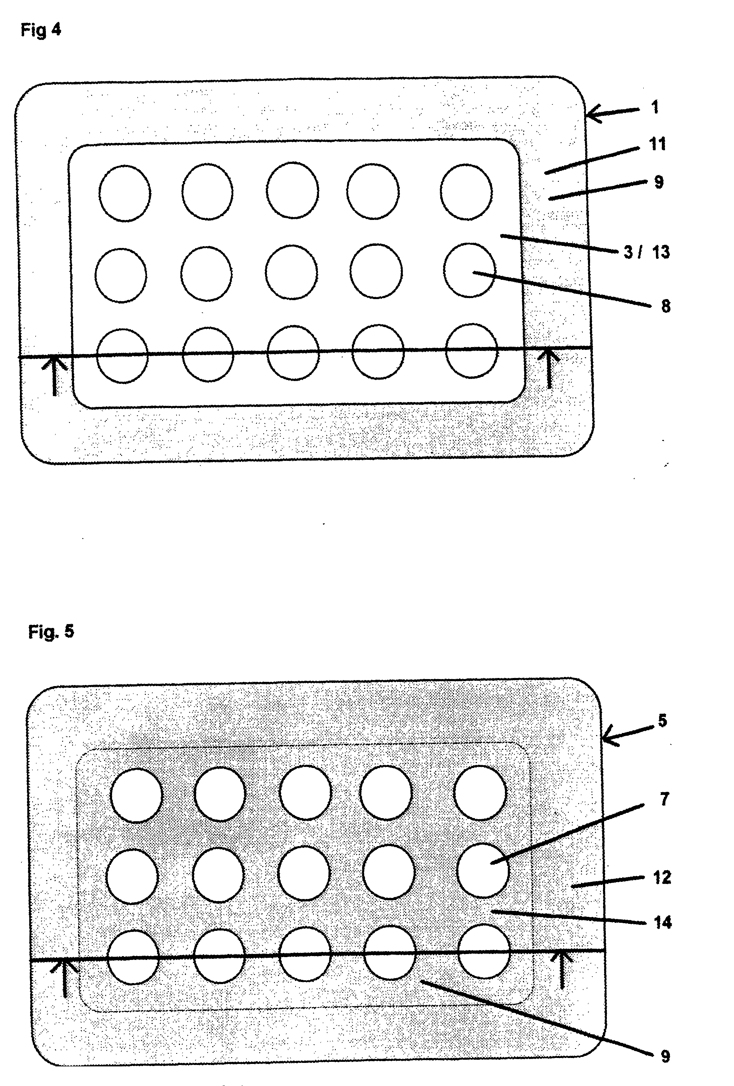

Die Figur 4, eine Draufsicht auf eine Matrize 1, zeigt dunkelschraffiert den Randbereich 11 und hellschraffiert den Schulterbereich 13. Der Randbereich 11 kann ein Rauhigkeitsmuster 9 aufweisen. Der Schulterbereich 13 liegt gegenüber dem Randbereich 11 um 0,01 bis 10 mm tiefer. Der hellschraffierte Bereich, d.h. der Schulterbereich 13, ist in vorteilhafter Ausführungsform teil- und insbesondere vollflächig mit dem beschriebenen Belag oder Schicht 3 niedriger Reibung abgedeckt. Im Schulterbereich 13 sind beispielhaft in regelmässiger Anordnung die Gesenköffnungen 8 eingezeichnet Es handelt sich in der Regel um Bohrungen, d.h. Öffnungen oder Ausnehmungen runden Querschnittes oder aber auch um Öffnungen ovalen Querschnittes. Auch Öffnungen polygonalen Querschnittes, wie z.B. rechteckige, quadratische oder sechseckige Öffnungen, ohne weiteres zu verwirklichen.

In Figur 5 ist ein Niederhalter 5 in der Draufsicht abgebildet Die gegen die Matrize und den beim Herstellungsprozess dazwischen zu liegen kommenden Verbund gerichtete Oberfläche 14 des Niederhalters 5 kann plan sein. Über die Berührungsflächen, die sich durch den Randbereich 12 des Niederhalters 5 und den Randbereich 11 der Matrize 1 ausbilden, wird in Arbeitsstellung der Verbund in der Weise festgeklemmt, dass der Verbund nicht fliessen oder sich verstrecken kann. Der Niederhalter 5 kann anstelle der planen Oberfläche auch einen Randbereich 12 und einen innerhalb des Randbereiches liegenden vertieften Bereich aufweisen oder der Niederhalter kann im wesentlichen nur aus dem Randbereich bestehen, d.h. einen Ring darstellen.

Im Randbereich 12 des Niederhalters 5 kann ein teil- oder vollflächiges Rauhigkeitsmuster angeordnet sein. Der Randbereich des Niederhalters 5 ist zweckmässig gegengleich angeordnet und im wesentlichen in gleicher Abmessung wie der Randbereich I 1 der Matrize 1.

Der Niederhalter 5 weist eine Mehrzahl von Öffnungen 7 oder Ausnehmungen, in vorliegendem Falle Bohrungen, auf. Die Bohrungen 7 werden vom Stempel, resp. von Stempelkörpern durchdrungen und entsprechend sind die Bohrungen in gleicher Lage und Anordnung und zumindest annähernd gleicher Grösse wie die Gesenköffnungen 8 in der Matrize 1.

In vorliegend bildlich dargestellter Ausführungsform wird eine verhältnismässig kleine Matrize gezeigt. Es ist auch möglich Matrizen nach vorliegender Erfindung zu gestalten, deren Schulterbeieich durch Quer- und /oder Längsstege unterteilt ist. Im Bereich dieser Stege wird der Metall-Kunststoff-Verbund vom Niederhalter klemmend festgehalten. Damit gelingt es beispielsweise mit einer Matrize und mit einem Stempelhub eine Mehrzahl von Formpackungen zu erzeugen. Nach der Verformung können die gleichzeitig gefertigten Formpackungen z.B. durch Trennschnitte entlang den Stegbereichen aufgeteilt werden.

Vorliegende Erfindung betrifft auch ein Verfahren zur Herstellung von kaltverformten Formpackungen aus einem Metall-Kunststoff-Verbund durch Streckziehen unter Verwendung einer Vorrichtung nach dem kennzeichnenden Teil des Hauptanspruchs. Das Verfahren zeichnet sich dadurch aus, dass die Matrize und der Niederhalter einander gegenüberliegende Randbereiche aufweisen und der Randbereich des Niederhalters und der Randbereich der Matrize über den Metall-Kunststoff-Verbund einander anliegen und der Metall-Kunststoff-Verbund klemmend und unverstreckbar zwischen dem Randbereich der Matrize und dem Randbereich des Niederhalters festgelegt wird und der Schulterbereich der Matrize, wobei der ganze Schulterbereich, nämlich der Bereich der Matrize, der sich innerhalb des Randbereiches befindet und der die Schultern bildet, welche die Gesenköffnungen umgeben, tiefer liegend angeordnet ist, in Abstand zu den gegenüberliegenden Niederhalterteilen liegt, so dass der Metall-Kunststoff-Verbund im tiefer liegenden Schulterbereich fliessen und unter Verstreckung verformt wird und der Stempel den Metall-Kunststoff-Verbund über die Schultern der Matrize in die Gesenköffnungen, die sich innerhalb des tiefer liegenden Schulterbereiches in der Matrize befinden, zieht, wobei die Oberfläche des tiefer liegenden Schulterbereiches gegenüber dem Randbereich der Matrize 0,01 bis 10mm tiefer liegt und der Metall-Kunststoff-Verbund über die Oberfläche des tiefer liegenden Schulterbereiches gleitend oder fliessend gezogen und/oder gestreckt wird.

Mit Kaltverformung wird in vorliegendem Fall eine Verformung bei Temperaturen von beispielsweise 10 bis 35 °C und vorzugsweise 20 bis 30 °C, umfasst.

Die erfindungsgemässe Vorrichtung kann zur Herstellung von kaltverformten Formpackungen, wie Blisterpackungen für Pharmazeutika, Nahrungs- und Genussmittel, technische Artikel, für Boden- und Deckelteile von halbstarren und starren Verpackungen, für Umhüllungen usw. aus einem Metall-Kunststoff-Verbund verwendet werden.

Es können Tiefungsverhältnisse, d.h. ein Verhältnis von Durchmesser der Vertiefung zu Höhe der Vertiefung von beispielsweise 2 bis 3 erzeugt werden. Der Durchmesser der Vertiefung, soweit es sich nicht um einen runden Querschnitt handelt, wird im Falle eines nicht kreisrunden Querschnittes, wie eines konvexen Querschnittes, z.B. elliptisch, oval, polygonal, rechteckig, trapezförmig, rhomboid usw., der kleinste Durchmesser verstanden.

Der grösste Durchmesser der einzelnen Vertiefungen kann beispielsweise von 1 bis 500 mm, die Höhe einer Vertiefung von 1 bis 100 mm, betragen.

Die zu Formpackungen, wie Blisterpackungen und insbesondere Bodenteilen von Blisterpackungen, verarbeiteten Verbunde bleiben porenfrei auch bei grossen Tiefungsverhältnissen und auch die Ausschussrate bei der Umformung vermindert sich erheblich.

### Beispiel:

1. Ein Metall-Kunststoff-Verbund des Schichtaufbaus einer 25 µm dicken orientierten Polyethylenfolie, einer 45 µm dicken Aluminiumfolie und einer 60 µm PVC-Schicht werden Umformversuchen in einer erfindungsgemässen Vorrichtung aus einer Matrize, einem Niederhalter und einem Stempel unterworfen. Die PVC-Schicht stellt beim fertigen Produkt die Packungsinnenseite dar. Die Matrize erzeugt eine Formpackung in Form eines 10-fach Blisters, d.h. einen Blisterboden mit 10 Vertiefungen, mit einem Durchmesser jeder Vertiefung von 13,5 mm. Entsprechend weist die Matrize als Gesenköffnungen 10 Bohrungen auf und der Niederhalter weist ebenfalls an äquivalenter Stelle 10 Bohrungen auf. Der Stempel ist mit 10 Stempelkörpern ausgestattet, welche durch die Bohrungen des Niederhalters dringen können und die Verformung des Verbundes entsprechend den Gesenköffnungen in der Matrize bewirken. Der Durchmesser jedes Stempelkörpers beträgt 12,8 mm. Die Matrize weist einen Randbereich in einer Breite von 20 mm auf und innerhalb des Randbereiches liegt der Schulterbereich. Der Randbereich der Matrize ist mit einem Rauhigkeitsmuster, einer Riffelung, versehen. Die Oberfläche des Schulterbereiches ist gegenüber dem Randbereich um 0,3 mm abgesenkt. Zu diesem Zwecke wird die Matrize einer spanabhebenden Bearbeitung, einem Ausfräse-Verfahren, unterworfen. Der Verbund wird zwischen Matrize und Niederhalter eingeführt, der Niederhalter gegen die Matrize gepresst, wobei der Verbund derart festgehalten wird, dass im Bereich der Pressung zwischen Niederhalter und Matrize kein Fliessen des Verbundes eintreten kann. Der Stempel wird soweit abgesenkt, dass sich der Verbund im Bereich der Gesenköffnungen gegenüber seiner ursprünglichen planen Oberfläche um 3,7 mm verformt. Das Verfahren wird ohne Wärmeeinwirkung, kalt, durchgeführt. Der Stempel wird abgesenkt und wieder zurückgezogen, der Druck auf dem Niederhalter aufgehoben und der Matrize kann ein Bodenteil für eine Blisterpackung entnommen werden. Die porenfreie bleibende Tiefe der Vertiefungen wird mit 3,1 mm ausgemessen.
2. Der Versuch gemäss Beispiel 1 wird wiederholt. Dazu wird jedoch eine Matrize verwendet, deren Schulterbereich bezogen auf das Niveau der Oberfläche des Randbereiches, um 0,15 mm abgetieft ist. Der ganze Schulterbereich ist gegenüber dem Randbereich um 8,15 mm ausgefräst und der ganze Schulterbereich ist mit einer 8 mm dicken Schicht aus Polytetrafluörethylen (Teflon) belegt. Somit ist der Schulterbereich gegenüber dem Randbereich der Matrize um 0,15 mm abgetieft. Der Durchmesser der Gesenköffnungen beträgt wiederum 13,5 mm, der Stempeldurchmesser 12,8 mm. Ein Verbund, wie in Beispiel 1 erwähnt, wird wiederum in die Vorrichtung eingeführt und auf gleiche Weise zu einem Bodenteil für eine Blisterpackung verformt. Der Stempel wird um 3,8 mm abgesenkt und wieder zurückgezogen. Die porenfreie bleibende Tiefe der Vertiefungen wird mit 3,2 mm ausgemessen.
3. Ein Vergleichsversuch mit einer Matrize, die keinen Randbereich und Schulterbereich aufweist, sondern lediglich die Gesenköffnungen mit einem Durchmesser von 13,5 mm aus der planen Fläche heraus in der Matrize angebracht sind, wird durchgeführt. Der Verbund wird somit zwischen Matrize und Niederhalter nicht nur im Randbereich geklemmt, sondern auch im Schulterbereich, d.h. vollflächig ausserhalb der Gesenköffnungen. Ein Verbund wie in Beispiel 1 beschrieben wird zu Bodenteilen von Blisterpackungen ebenfalls durch Kaltverformen verarbeitet, wobei die gleichen Bedingungen bezüglich Gesenköffnungen, Stempeldurchmessser (12,8 mm) und Absenkungstiefe (3,4 mm) des Stempels eingehalten werden. Die porenfreie bleibende Tiefe der Vertiefungen wird mit 3,0 mm ausgemessen.
4. Bei einem weiteren Versuch werden Serien von Bodenteilen von Blisterpackungen hergestellt. Die Absenkungstiefe des Stempels beträgt 4,4 mm. Die Tiefungsbedingungen werden derart gewählt, dass mit einer Matrize nach dem Stand der Technik und wie in Beispiel 3 beschrieben, bezüglich der porenfreien bleibenden Vertiefungen eine Ausschussrate von 100 % erzielt wird. Bei gleicher Versuchsanlage und unter gleichen Versuchsbedingungen, jedoch mit dem Unterschied, dass mit einer erfindungsgemässen Matrize gemäss Beispiel 1 gearbeitet wird, sinkt die Ausschussrate auf 88 %. Bei gleicher Versuchsanlage und unter gleichen Versuchsbedingungen, jedoch mit dem Unterschied, dass mit einer erfindungsgemässen Matrize gemäss Beispiel 2 gearbeitet wird, sinkt die Ausschussrate auf 58 %.

## Patentansprüche

1. Vorrichtung zum Herstellen von kaltverformten Formpackungen aus einem Metall-Kunststoff-Verbund durch Streckziehen, enthaltend eine Matrize (1) mit Gesenköffnungen, ein in die Gesenköffnungen der Matrize (1) vortreibbaren Stempel (6) und einen Niederhalter (5), als Klemmeinrichtung, die den Verbund zwischen Matrize und Klemmeinrichtung festhält, wobei
die Matrize (1) und der Niederhalter (5) einen einander gegenüberliegenden Randbereich (11, 12) aufweisen und die Matrize (1) innerhalb des Randbereiches (11) einen Schulterbereich (13), welcher die Gesenköffnungen umgibt, aufweist, wobei der ganze Schulterbereich (13), nämlich der Bereich der Matrize (1), der sich innerhalb des Randbereiches (11) befindet und der die Schultern bildet, welche die Gesenköffnungen umgeben, tiefer liegend angeordnet ist, und die Oberfläche des tiefer liegenden Schulterbereiches (13) 0,01 bis 10 mm tiefer liegt als die Oberfläche des Randbereiches (11) der Matrize (1) und der Randbereich (12) des Niederhalters (5) und der Randbereich (11) der Matrize (1) in Arbeitsstellung über den Metall-Kunststoff-Verbund einander anliegen und den Metall-Kunststoff-Verbund klemmend und unverstreckbar festlegen und der tiefer liegende Schulterbereich (13) der Matrize (1) in Arbeitsstellung in Abstand zu den gegenüberliegenden Niederhalterteilen liegt, so dass der Metall-Kunststoff-Verbund im tiefer liegenden Schulterbereich (13) fliessen und unter Verstreckung verformt werden kann.

2. Vorrichtung nach Anspruch 1, **dadurch gekennzeichnet, dass** die Oberfläche des tiefer liegenden Schulterbereiches der Matrize 0,1 bis 2,0 mm, vorzugsweise 0,15 bis 0,3 mm, tiefer liegt als die Oberfläche des Randbereiches der Matrize.

3. Vorrichtung nach Anspruch 1, **dadurch gekennzeichnet, dass** die Matrize 1 bis 200 und vorzugsweise 8 bis 40 Gesenköffnungen, aufweist

4. Vorrichtung nach Anspruch 1, **dadurch gekennzeichnet, dass** die Wände der Gesenköffnungen der Matrize in einem Winkel von 90 Grad (Winkelgrade) zur Oberfläche des Schulterbereiches stehen.

5. Vorrichtung nach Anspruch 1, **dadurch gekennzeichnet, dass** der Bereich zwischen der Wand der Gesenköffnung und der Oberfläche des Schulterbereiches gerundet ist und die Rundung einen Radius von 0,1 bis 10 mm und vorzugsweise einen Radius von 0,1 bis 1 mm aufweist.

6. Vorrichtung nach Anspruch 1, **dadurch gekennzeichnet, dass** die Randbereiche des Niederhalters und der Matrize eine Breite von 1 bis 100 mm, zweckmässig 2 bis 30 mm und vorzugsweise 3 bis 20 mm aufweisen.

7. Vorrichtung nach Anspruch 1, **dadurch gekennzeichnet, dass** die Abstände im Schulterbereich zwischen Randbereich und Gesenköffnungen und zwischen den einzelnen Gesenköffnungen der Matrize 2 bis 50 mm und vorzugsweise 5 bis 25 mm beträgt.

8. Vorrichtung nach Anspruch 1, **dadurch gekennzeichnet, dass** der Randbereich (12) des Niederhalters (5) oder der Randbereich (11) der Matrize (1) oder die Randbereiche (12,11) des Niederhalters (5) und der Matrize (1) teil- oder vollflächig ein Rauhigkeitsmuster aufweisen.

9. Vorrichtung nach Anspruch 1, **dadurch gekennzeichnet, dass** die Schulterbereiche (13) der Matrize (1) ganz oder teilweise mit einer Oberflächenschicht (3) niedriger Reibung, vorzugsweise einer Reibung von 0,3 bis 2,1, bedeckt sind.

10. Vorrichtung nach Anspruch 1, **dadurch gekennzeichnet, dass** die Schulterbereiche (13) der Matrize (1) ganz oder teilweise mit einer Oberflächenschicht (3) enthaltend oder bestehend aus Kunststoffen der Reihen Polytetrafluorethylen, Polyoxymethylen, Polyethylen oder Polyethylenterephthalat überzogen sind.

11. Vorrichtung nach Anspruch 1, **dadurch gekennzeichnet, dass** wenigstens die verformungswirksame Oberfläche des Stempels (6), die mit dem Verbund in Berührung kommt, aus Polytetrafluorethylen, Polyoxymethylen, Polyethylen oder Polyethylenterephthalat ist.

12. Verfahren zur Herstellung von kaltverformten Formpackungen aus einem MetallKunststoff-Verbund mit der Vorrichtung nach Anspruch 1 durch Streckziehen, wobei
die Matrize (1) und der Niederhalter (5) einander gegenüberliegende Randbereiche (11, 12) aufweisen und der Randbereich (12) des Niederhalters (5) und der Randbereich (11) der Matrize (1) über den Metall-Kunststoff-Verbund einander anliegen und der Metall-Kunststoff-Verbund klemmend und unverstreckbar zwischen dem Randbereich (11) der Matrize (1) und dem Randbereich (12) des Niederhalters (5) festgelegt wird und ein Schulterbereich (13) der Matrize (1), wobei der ganze Schulterbereich (13), nämlich der Bereich der Matrize (1), der sich innerhalb des Randbereiches (11) befindet und der die Schultern bildet, welche die Gesenköffnungen umgeben, tiefer liegend angeordnet ist, in Abstand zu den gegenüberliegenden Niederhalterteilen liegt, so dass der Metall-Kunststoff-Verbund im tiefer liegenden Schulterbereich (13) fliessen und unter Verstreckung verformt werden kann und der Stempel (6) den Metall-Kunststoff-Verbund über die Schultern der Matrize (1) in die Gesenköffnungen (7), die sich innerhalb des tiefer liegenden Schulterbereiches (13) in der Matrize (1) befinden, zieht, wobei die Oberfläche des tiefer liegenden Schulterbereiches (13) gegenüber dem Randbereich (11) der Matrize (1) 0,01 bis 10mm tiefer liegt und der Metall-Kunststoff-Verbund über die Oberfläche des tiefer liegenden Schulterbereiches (13) gleitend oder fliessend gezogen und/oder gestreckt wird.

13. Verfahren zur Herstellung von kaltverformten Formpackungen gemäss Anspruch 12 aus einem Metall-Kunststoff-Verbund durch Ziehen des Verbundes mittels einer Matrize (1) und Niederhalter (5), die den Verbund festlegen und einem Stempel (6), der den Verbund verformt,
**dadurch gekennzeichnet, dass**
Metall-Kunststoff-Verbunde des Aufbaues, enthaltend
oPA 25 / Al 45 / PVC 60 oder
oPA 25 / Al 45 / oPA 25 oder
Al 120 / PP 50 oder
oPA 25 / Al 60 / PE 50 oder
oPA 25 / Al 60 / PP 60,
wobei oPA für orientiertes Polyamid, PVC für Polyvinylchlorid, PE für Polyethylen, PP für Polypropylen und Al für Aluminium steht und die Ziffern für die Schicht-, resp. Foliendicke in µm stehen, verformt werden.

## Claims

1. Device for the production of cold-formed packages from a metal/plastic composite by stretch forming, containing a die (1) with openings, a punch (6) which can be driven into the openings in the die (1) and a clamping device (5) which holds the composite between the die and the clamping device, wherein the die (1) and the clamping device (5) have opposing edge regions (11, 12), the die (1) is provided within the edge region (11) with a shoulder region (13) which surrounds the openings, the entire shoulder region (13), i.e. the region of the die (1) situated within the edge region (11) and forming the shoulders which surround the openings, is arranged lower, the surface of the lower shoulder region (13) is 0.01 to 10 mm lower than the surface of the edge region (11) of the die (1), the edge region (12) of the clamping device (5) and the edge region (11) of the die (1) bear against one another over the metal/plastic composite in the working position and clamp the metal/plastic composite in such a manner that it cannot be stretched and the lower shoulder region (13) of the die (1) is situated at a distance from the opposing parts of the clamping device in the working position in such a manner that the metal/plastic composite can flow and be formed with stretching in the lower shoulder region (13).

2. Device according to claim 1, **characterised in that** the surface of the lower shoulder region of the die is 0.1 to 2.0 mm, preferably 0.15 to 0.3 mm lower than the surface of the edge region of the die.

3. Device according to claim 1, **characterised in that** the die has 1 to 200 and preferably 8 to 40 openings.

4. Device according to claim 1, **characterised in that** the walls of the openings in the die are at an angle of 90 degrees (angular degrees) to the surface of the shoulder region.

5. Device according to claim 1, **characterised in that** the region between the wall of the opening and the surface of the shoulder region is rounded and the rounding has a radius of 0.1 to 10 mm and preferably a radius of 0.1 to 1 mm.

6. Device according to claim 1, **characterised in that** the edge regions of the clamping device and of the die have a width of 1 to 100 mm, advantageously 2 to 30 mm and preferably 3 to 20 mm.

7. Device according to claim 1, **characterised in that** the distances in the shoulder region between the edge region and the openings and between the individual openings in the die are 2 to 50 mm and preferably 5 to 25 mm.

8. Device according to claim 1, **characterised in that** the edge region (12) of the clamping device (5) or the edge region (11) of the die (1) or the edge regions (12, 11) of the clamping device (5) and the die (1) have a roughness pattern over part of all of their surfaces.

9. Device according to claim 1, **characterised in that** the shoulder regions (13) of the die (1) are completely or partially covered in a surface layer (3) displaying low friction, preferably friction of 0.3 to 2.1.

10. Device according to claim 1, **characterised in that** the shoulder regions (13) of the die (1) are completely or partially covered in a surface layer (3) containing or consisting of plastics from the group consisting of polytetrafluoroethylene, polyoxymethylene, polyethylene or polyethylene terephthalate.

11. Device according to claim 1, **characterised in that** at least the forming surface of the punch (6) coming into contact with the composite is made of polytetrafluoroethylene, polyoxymethylene, polyethylene or polyethylene terephthalate.

12. Process for the production of cold-formed packages from a metal/plastic composite using the device according to claim 1 by stretch forming, wherein the die (1) and the clamping device (5) have opposing edge regions (11, 12), the edge region (12) of the clamping device (5) and the edge region (11) of the die (1) bear against one another over the metal/plastic composite, the metal/plastic composite is clamped between the edge region (11) of the die (1) and the edge region (12) of the clamping device (5) in such a manner that it cannot be stretched, a shoulder region (13) of the die (1), the entire shoulder region (13), i.e. the region of the die (1) situated within the edge region (11) and forming the shoulders which surround the openings, being arranged lower, is situated at a distance from the opposing parts of the clamping device in such a manner that the metal/plastic composite can flow and be formed with stretching in the lower shoulder region (13) and the punch (6) draws the metal/plastic composite over the shoulders of the die (1) into the openings (7) situated within the lower shoulder region (13) in the die (1), the surface of the lower shoulder region (13) being 0.01 to 10 mm lower than the edge region (11) of the die (1) and the metal/plastic composite being drawn and/or stretched in a sliding or flowing manner over the surface of the lower shoulder region (13).

13. Process for the production of cold-formed packages according to claim 12 from a metal/plastic composite by drawing the composite by means of a die (1) and a clamping device (5) which fix the composite and a punch (6) which forms the composite, **characterised in that** metal/plastic composites of the structure containing
oPA 25/Al 45/PVC 60 or
oPA 25/Al 45/oPA 25 or
Al 120/PP 50 or
oPA 25/Al 60/PE 50 or
oPA 25/Al 60/PP 60,
are formed, where oPA stands for oriented polyamide, PVC for polyvinyl chloride, PE for polyethylene, PP for polypropylene and Al for aluminium, and the numerals stand for the layer or foil thickness respectively in µm.

## Revendications

1. Dispositif pour la fabrication d'emballages formés à froid à partir d'un stratifié métal-plastique par étirage, comprenant une matrice (1) avec des ouvertures, un poinçon (6) déplaçable dans les ouvertures de la matricé (1) et un outil de retenue (5) comme dispositif de serrage qui maintient le stratifié entre la matrice et le dispositif de serrage, dans lequel la matrice (1) et l'outil de retenue (5) présentent des régions de bord (11,12) placées en vis-à-vis et la matrice (1) présente à l'intérieur de la région de bord (11) une région d'épaulement (13) qui entoure les ouvertures de matrice, toute la région d'épaulement (13), à savoir la région de la matrice (1) qui se trouve à l'intérieur de la région de bord (11) et qui forme les épaulements qui entourent les ouvertures de matrice, est placée plus profond, et la surface de la région d'épaulement (13) placée plus profond est placée plus profond de 0,01 à 10 mm que la surface de la région de bord (11) de la matrice (1) et la région de bord (12) de l'outil de retenue (5) et la région de bord (11) de la matrice (1) en position de travail sont placées l'une contre l'autre sur le stratifié métal-plastique et maintiennent le stratifié métal-plastique fermement de manière qu'il ne puisse pas être étiré et la région d'épaulement (13) de la matrice (1) placée plus profond en position de travail est disposée écartée des parties de l'outil de retenue en vis-à-vis, de manière que le stratifié métal-plastique puisse fluer dans la région d'épaulement (13) placée plus profond et puisse être formé par étirage.

2. Dispositif selon la revendication 1, **caractérisé en ce que** la surface de la région d'épaulement de la matrice placée plus profond est placée plus profond de 0,1 à 2,0 mm, de préférence 0,15 à 0,3 mm, que la surface de la région de bord de la matrice.

3. Dispositif selon la revendication 1, **caractérisé en ce que** la matrice présente 1 à 200, de préférence 8 à 40 ouvertures.

4. Dispositif selon la revendication 1, **caractérisé en ce que** les parois des ouvertures de la matrice sont selon un angle de 90 degrés (degré angulaire) par rapport à la surface de la région d'épaulement.

5. Dispositif selon la revendication 1, **caractérisé en ce que** la région entre la paroi de l'ouverture de matrice et la surface de la région d'épaulement est arrondie et le rond présente un rayon de 0,1 à 10 mm et de préférence un rayon de 0,1 à 1 mm.

6. Dispositif selon la revendication 1, **caractérisé en ce que** les régions de bord de l'outil de retenue et de la matrice présentent une largeur de 1 à 100 mm, mieux encore 2 à 30 mm et de préférence 3 à 20 mm.

7. Dispositif selon la revendication 1, **caractérisé en ce que** les distances dans la région d'épaulement entre la région de bord et les ouvertures de matrice et entre les ouvertures individuelles de la matrice sont de 2 à 50 mm et de préférence 5 à 25 mm.

8. Dispositif selon la revendication 1, **caractérisé en ce que** la région de bord (12) de l'outil de retenue (5) ou la région de bord (11) de la matrice (1) ou les régions de bord (12, 11) de l'outil de retenue (5) et de la matrice (1) présentent un motif de rugosité sur une partie ou sur la totalité de la surface.

9. Dispositif selon la revendication 1, **caractérisé en ce que** les régions d'épaulement (13) de la matrice (1) sont recouvertes totalement ou partiellement avec une couche superficielle (3) de faible friction, de préférence une friction de 0,3 à 2,1.

10. Dispositif selon la revendication 1, **caractérisé en ce que** les régions d'épaulement (13) de la matrice (1) sont recouvertes totalement ou partiellement avec une couche superficielle (3) contenant ou constituée par des matières plastiques de la série du polytétrafluoroéthylène, du polyoxyméthylène, du polyéthylène ou du poly(téréphtalate d'éthylène).

11. Dispositif selon la revendication 1, **caractérisé en ce qu'**au moins la surface effectuant la déformation du poinçon (6) qui vient en contact avec le stratifié, est en polytétrafluoroéthylène, polyoxyméthylène, polyéthylène ou poly(téréphtalate d'éthylène).

12. Procédé de fabrication d'emballages formés à froid à partir d'un stratifié métal-plastique avec le dispositif selon la revendication 1 par étirage, dans lequel la matrice (1) et l'outil de retenue (5) présentent des régions (11, 12) placées en vis-à-vis et la région de bord (12) de l'outil de retenue (5) et la région de bord (11) de la matrice (1) sont placées l'une contre l'autre sur le stratifié métal-plastique et maintiennent le stratifié métal-plastique solidement et de manière qu'il ne puisse pas être étiré entre la région de bord (11) de la matrice (1) et la région de bord (12) de l'outil de retenue (5) et une région d'épaulement (13) de la matrice (1), dans lequel la région d'épaulement (13) totale, à savoir la région de la matrice (1) qui se trouve à l'intérieur de la région de bord (11) et qui forme les épaulements qui entourent les ouvertures, est placée plus profond, est distante des parties de l'outil de retenue en vis-à-vis, de manière que le stratifié métal-plastique flue dans la région de bord (13) placée plus profond et puisse être formé par étirage et le poinçon (6) étire le stratifié métal-plastique sur les épaulements de la matrice (1) dans les ouvertures (7) qui se trouvent à l'intérieur de la région d'épaulement (13) se trouvant plus profond dans la matrice (1), les surfaces de la région d'épaulement (13) se trouvant plus profond par rapport à la région de bord (11) de la matrice (1) se trouvant plus profond de 0,01 à 10 mm et le stratifié métal-plastique étant tiré et/ou étiré de manière glissante ou coulante sur les surfaces de la région d'épaulement (13) se trouvant plus profond.

13. Procédé de fabrication d'emballages formés à froid selon la revendication 12 à partir d'un stratifié métal-plastique par étirage du stratifié au moyen d'une matrice (1) et d'un outil de retenue (5) qui maintiennent le stratifié et d'un poinçon (6) qui met en forme le stratifié, **caractérisé en ce que** sont mis en forme des stratifiés métal-plastique de constitution contenant
oPA 25 / Al 45 / PVC 60 ou
oPA 25 / Al 45 / oPA 25 ou
Al 120 / PP 50 ou
oPA 25 / Al 60 / PE 50 ou
oPA 25 / Al 60 / PP 60,
où oPA signifie le polyamide orienté, PVC le poly(chlorure de vinyle), PE le polyéthylène, PP le polypropylène et Al l'aluminium et les nombres signifient l'épaisseur de la couche, respectivement de la feuille, en µm.
